# EUROPEAN PATENT SPECIFICATION

(11) **EP 4 555 754 B1**
(45) Date of publication and mention of the grant of the patent: **07.10.2026**
(21) Application number: 23762607.2
(22) Date of filing: 04.08.2023
(51) Int. Cl.: H04W 4/06, H04W 76/40, H04W 76/11

(54) **STATUS UPDATE FOR MULTICAST AND BROADCAST SERVICE (MBS)**
STATUSAKTUALISIERUNG FÜR MULTICAST- UND BROADCAST-DIENST (MBS)
MISE À JOUR D'ÉTAT POUR UN SERVICE DE MULTIDIFFUSION ET DE DIFFUSION (MBS)

(30) Priority: 11.08.2022 US 202263371190 P; 24.03.2023 US 202363492107 P
(43) Date of publication of application: 21.05.2025
(73) Proprietor: GOOGLE LLC, Mountain View CA 94043 (US)
(72) Inventor: HUANG FU, Chien-Chun, Taipei (TW); CHUANG, Poying, Taipei (TW)
(74) Representative: Marks & Clerk GST
(86) International application number: PCT/US2023/071676
(87) International publication number: WO 2024/036084

(56) References cited:
- US-A1- 2016 219 451
- NOKIA ET AL: "Including the reason of removing a joined UE from an MBS session by the network", vol. CT WG1, no. E-Meeting; 20220217 - 20220225, 4 March 2022 (2022-03-04), XP052121848, Retrieved from the Internet <URL:https://ftp.3gpp.org/3guInternal/3GPP_Ultimate_CRPacks/CP-220256.zip 24501_CR3953r2_(Rel-17)_C1-221577_was_C1-220819_was_C1-220483_MBS_reasonRemoveUE.docx> [retrieved on 20220304]
- INTEL ET AL: "+CEMBMSR: AT command for eMBMS Status Reporting", vol. CT WG1, no. Sorrento (Italy); 20150202 - 20150206, 2 March 2015 (2015-03-02), XP051617403, Retrieved from the Internet <URL:http://www.3gpp.org/ftp/tsg%5Fct/TSG%5FCT/TSGC%5F67%5FShanghai/Docs/CP%2D150083%2Ezip> [retrieved on 20150302]

## Description

### TECHNICAL FIELD

This disclosure relates generally to wireless communications and to multicast and broadcast service (MBS).

### BACKGROUND

This background description is provided for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

A wireless communication system can support a multicast and broadcast service (MBS). MBS is a point-to-multipoint service in which data is transmitted from a single source entity to multiple recipients, either to all users in a broadcast service area, or to users that have joined a particular multicast group. The corresponding types of MBS sessions are: broadcast MBS sessions and multicast MBS sessions. For both types of MBS sessions, MBS service data is transmitted over an associated protocol data unit (PDU) session between a user equipment (UE) and a data network (DN) of a wireless communication session. A PDU session defines an end-to-end user plane connectivity between the UE and the DN. The UE coordinates with a network entity (such as a base station or core network) to manage and configure PDU sessions associated with a service of the wireless communication system. The 3^{rd} generation partnership project (3GPP) standards body has described MBS in technical specifications such as technical specification (TS) 27.007. Traditional techniques for communicating or updating status of a PDU session are inadequate to support new features associated with a UE utilizing an MBS.

US 2016/219451 A1 relates to the implementation of mobile termination control techniques to support eMBMS. A TE may use a set-type status reporting command to specify whether eMBMS session parameter values are to be reported to TE. After using a set-type status reporting command to enable reporting of eMBMS session parameters, TE may receive a status information message from TA.

In XP0521218484 (C1-221577), if the network-requested PDU session modification procedure is triggered by a UE-requested PDU session modification procedure and the UE has included the Requested MBS container IE in the PDU SESSION MODIFICATION REQUEST message with the MBS operation set to "Join MBS session", the SMF shall include the TMGI for the MBS session IDs that the UE is allowed to join, if any, in the Received MBS container IE, shall set the MBS Decision to "MBS join is accepted" for each of those Received MBS information and may include the MBS start time to indicate the time when the MBS session starts.

### SUMMARY

The systems, methods, and devices of this disclosure each have several innovative aspects, no single one of which is solely responsible for the desirable attributes disclosed herein.

This disclosure includes various examples of communicating and updating a status for a multicast and broadcast service (MBS) session. In some implementations, a user equipment (UE) reconfigures an existing protocol data unit (PDU) session to support the MBS. In some implementations, the UE establishes a new PDU session for the MBS. A PDU session that supports an MBS may be referred to as an MBS PDU session.

In some implementations, a UE includes an application processor (AP) and a modem. The AP can send a first attention (AT) command to the modem including an MBS session status setting that controls MBS session status reporting for an MBS session. The first AT command can be a set AT command, such as an MBS session status reporting (+CMSSR=) command. The modem can send a second AT command to the AP, such as a +CMSSRI command, that includes an MBS session status report. In some implementations, the second AT command is an unsolicited AT command that the modem sends to the AP when it detects a change in the MBS session status of the MBS session.

One innovative aspect of the subject matter described in this disclosure can be implemented as a method for managing an MBS PDU session by a UE. The method includes transmitting, from an AP of the UE to a modem of the UE, a first AT command indicating an MBS session status setting for an MBS session, and receiving, from the modem, a second AT command including an MBS session status report for the MBS session.

Another innovative aspect of the subject matter described in this disclosure can be implemented as a method for managing an MBS PDU session by a UE. The method includes receiving, at a modem of the UE from an AP of the UE, a first AT command indicating an MBS session status setting for an MBS session, and transmitting, from the modem to the AP, a second AT command including an MBS session status report for the MBS session.

Details of one or more implementations of the subject matter described in this disclosure are set forth in the accompanying drawings and the description below. Other features, aspects, and advantages will become apparent from the description, the drawings, and the claims. Note that the relative dimensions of the following figures may not be drawn to scale.

### BRIEF DESCRIPTION OF THE DRAWINGS

**Figure 1** shows an example message flow for a UE to join an MBS session over an existing PDU session, where an AP turns on the MBS status update and receives the MBS status update from a modem, according to some implementations.
**Figure 2** shows an example message flow for a UE to establish a new PDU session that supports one or more MBS sessions and the AP turns on the MBS status update and receives the MBS status update from a modem, according to some implementations.
**Figure 3** shows an example message flow for a UE to join an MBS session over an existing PDU session but the network rejects the MBS join request and an AP receives an MBS status update from the modem, according to some implementations.
**Figure 4A** shows an example message flow for a UE to join an MBS session and establish a new PDU session that supports one or more MBS sessions but a network rejects the MBS join request and an AP receives an MBS status update from the modem, according to some implementations.
**Figure 4B** shows another example message flow for a UE to join an MBS session and establish a new PDU session that supports one or more MBS sessions but the network rejects the MBS join request and an AP receives an MBS status update from the modem, according to some implementations.
**Figure 5** shows an example message flow in which a network updates MBS parameters and an AP receives an MBS status update from a modem, according to some implementations.
**Figure 6** shows an example message flow in which a network removes a UE from an MBS session and an AP receives an MBS status update from a modem, according to some implementations.
**Figure 7** shows an example AT command for MBS session status reporting, according to some implementations.
**Figure 8** shows an example AT command for setting or defining an MBS PDU session, according to some implementations.
**Figure 9** shows an example AT command for both setting or defining an MBS session context for the MBS PDU session and trigger a PDU session modification procedure, according to some implementations.
**Figure 10** shows an example AT command for querying the status of an active MBS PDU session, according to some implementations.
**Figure 11** shows an example AT command for querying the status of an active MBS PDU session, according to some implementations.
**Figure 12** shows an example implementation of a UE.
**Figure 13** shows an example implementation of a network.

Like reference numbers and designations in the various drawings indicate like elements.

### DETAILED DESCRIPTION

A multicast and broadcast service (MBS) is transmitted over an associated protocol data unit (PDU) session. A user equipment (UE) (which also may be referred to as a terminal equipment (TE)) can join or leave an MBS session of the MBS. In some implementations, the UE modifies an existing PDU session or establishes a new PDU session that supports an MBS. A PDU session that supports an MBS may be referred to as an MBS PDU session. A UE can join one or more MBS sessions via the MBS PDU session. In some implementations, commands between the application processor (AP) and the modem of the UE are used for communicating status updates regarding an MBS session of the MBS PDU session. The AP of the UE can configure a status update setting and provide a status update or a status report for the MBS session by providing an attention (AT) command to the modem of the UE. The modem of the UE can coordinate with a network entity to manage the MBS PDU session.

If the MBS session is multicast, the Service Announcement (over the application layer) can include the data network name (DNN) and network slice selection assistance information (S-NSSAI) of the PDU session to indicate which PDU session should be associated with the MBS. The MBS service-related information (such as default public land mobile network identifier (PLMN ID), DNN and S-NSSAI) can also be pre-configured in the UE.

If there is an existing PDU session that the UE can use to send a join request for an MBS session, the UE sends a PDU Session Modification Request over that PDU session. If the UE has no appropriate PDU session established with the DNN and S-NSSAI for the MBS session, the UE joins the MBS session by sending PDU Session Establishment Request requesting establishment of an associated PDU session together with one or several MBS Session ID(s) and join request, as further described below.

Either the UE or the network can request to leave the MBS session. When the UE determines to leave the Multicast MBS session, it sends PDU session Modification request to inform the core network (such as a network entity of a 5G core network (5GC)) regarding the leaving operation. When the network determines to remove the UE from the MBS session, core network component (such as session management function (SMF)) initiates a PDU session modification procedure (for example, sending PDU session Modification command) to inform the UE of the MBS session release.

An MBS session can be location dependent. For local multicast services, the MBS service area information is provided to the UE. The UE can have information about local multicast service including MBS service area via Service Announcement over application layer. If the UE determines it is in the MBS service area (based on the information about local multicast service such as obtained via Service Announcement) the UE sends the PDU session modification request (with MBS session ID) or the PDU session establishment request (with MBS session ID) to join the multicast group.

The Requested MBS container information element (IE) (shown in Table 1) is used for the UE to request to join or leave one or more MBS sessions in either PDU session establishment request message or PDU session modification request message.

**Table 1**

| 8 | 7 | 6 | 5 | 4 | 3 | 2 | 1 | |
|---|---|---|---|---|---|---|---|---|
| Requested MBS container IEI | | | | | | | | octet 1 |
| Length of Requested MBS container contents | | | | | | | | octet 2 |
| | | | | | | | | octet 3 |
| MBS session information 1 | | | | | | | | octet 4 |
| | | | | | | | | octet l |
| MBS session information 2 | | | | | | | | octet l+1* |
| | | | | | | | | octet l* |
| ... | | | | | | | | octet l+1* |
| | | | | | | | | octet m* |
| MBS session information p | | | | | | | | octet m+1* |
| | | | | | | | | octet n* |

**Table 2**

| 8 | 7 | 6 | 5 | 4 | 3 | 2 | 1 | |
|---|---|---|---|---|---|---|---|---|
| 0 | 0 | 0 | 0 | MBS operation | | Type of MBS session ID | | octet 4 |
| spare | | | | | | | | |
| MBS session ID | | | | | | | | octet 5 |
| | | | | | | | | octet l |

As shown in Table 2, the main parameters are: "Type of MBS session ID" and "MBS operation". The "Type of MBS session ID" can be "Temporary Mobile Group Identity (TMGI) ", "Source specific IP multicast address for IPv4" or "Source specific IP multicast address for IPv6". The "MBS operation" can be "Join MBS session" or "Leave MBS session".

As shown in Table 3, the Received MBS container information element is used by the network to indicate to the UE the information of the MBS sessions.

**Table 3**

| 8 | 7 | 6 | 5 | 4 | 3 | 2 | 1 | |
|---|---|---|---|---|---|---|---|---|
| Received MBS container IEI | | | | | | | | octet 1 |
| Length of Received MBS container contents | | | | | | | | octet 2 |
| | | | | | | | | octet 3 |
| Received MBS information 1 | | | | | | | | octet 4 |
| | | | | | | | | octet l |
| Received MBS information 2 | | | | | | | | octet l+1* |
| | | | | | | | | octet l* |
| ... | | | | | | | | octet l+1* |
| | | | | | | | | octet m* |
| Received MBS information p | | | | | | | | octet m+1* |
| | | | | | | | | octet n* |

**Table 4**

| 8 | 7 | 6 | 5 | 4 | 3 | 2 | 1 | |
|---|---|---|---|---|---|---|---|---|
| Rejection cause | | | MSAI | | MD | | | octet 4 |
| 0 | 0 | 0 | 3 | MSCI | MTI | | IPAE | octet 5 |
| spare | | | | | | | | |
| TMGI | | | | | | | | octet 6 |
| | | | | | | | | octet j |
| Source IP address information | | | | | | | | octet j+1* |
| | | | | | | | | octet v* |
| Destination IP address information | | | | | | | | octet v+1* |
| | | | | | | | | octet k* |
| MBS service area | | | | | | | | octet k+1* |
| | | | | | | | | octet s* |
| MBS timers | | | | | | | | octet s+1* |
| | | | | | | | | octet i* |
| MBS security container | | | | | | | | octet i+1* |
| | | | | | | | | octet e* |

As shown in Table 4, the "MBS Decision (MD)" parameter can be set to "MBS service area update", "MBS join is accepted", "MBS join is rejected" or Remove UE from MBS session. The Reject cause is set to the reason when the MD is set to "MBS join is rejected" or "Remove UE from MBS session." The "MBS service area" is set to the service area where the MBS service is applicable. This parameter can contain the MBS TAI list, the NR CGI list or both, that identifies the service area(s) for a local MBS service. The "MBS timers" is used to indicate the back-off timer for joining the MBS session or the start time of this MBS session. The "MBS security container" includes the MBS Service Key Identifier, the MBS Service Key (MSK), the MBS Traffic Key Identifier (MTK ID) and the Encrypted MBS Traffic Key (Encrypted MTK).

As mentioned earlier, this disclosure includes various examples of communicating and updating a status for an MBS.

In some aspects, commands between the AP and the modem of the UE are used to configure MBS session status updates or provide MBS session status updates regarding one or more MBS sessions that are supported by the MBS PDU session. The AP can send a first AT command including an MBS session status setting that controls the MBS session status updates (which may be referred to as MBS session status reporting) for an MBS session. In some implementations, the first AT command can be a set AT command, such as an MBS session status reporting (+CMSSR=) command, that is sent from the AP to the modem. The MBS session status setting either enables or disables the MBS session status reporting from the modem.

In some aspects, the modem sends a second AT command, such as a +CMSSRI command, that includes an MBS session status report. The modem can determine whether to send the second AT command to the AP depending on the MBS session status setting. In some implementation, the second AT command is an unsolicited AT command that includes the MBS session status report. In some implementations, the modem sends the second AT command when it detects a change in one or more parameters that indicate the MBS session status of the MBS session. In some implementations, the one or more parameters of the MBS session status report include an MBS decision (MBS_decision) and an MBS reject cause (MBS_reject_cause). The MBS decision can indicate a network decision affecting the MBS session. For example, the MBS decision can indicate whether an MBS join request is accepted, an MBS join request is rejected, or the UE is being removed from the MBS session. The MBS reject cause can indicate either a reason for rejecting the MBS session or a reason for removing the UE from the MBS session. In some implementations, the one or more parameters of the MBS session status report include a context identifier (CID), a temporary mobile group identity (TMGI), the MBS decision (MBS_decision), the MBS reject cause (MBS_reject_ cause), an MBS tracking area identity list (MBS_TAI_list), an MBS cell global identifier list (MBS_CGI_list), a source IP address (Source_IP), a destination address (Destination_IP), an MBS start time (MBS_Start_Time), an MBS timer (MBS_timer), an MBS service key identifier (MSK_ID), an MBS service key (MSK), an MBS traffic key identifier (MTK_ID), and an encrypted MBS traffic key (Enc_MTK).

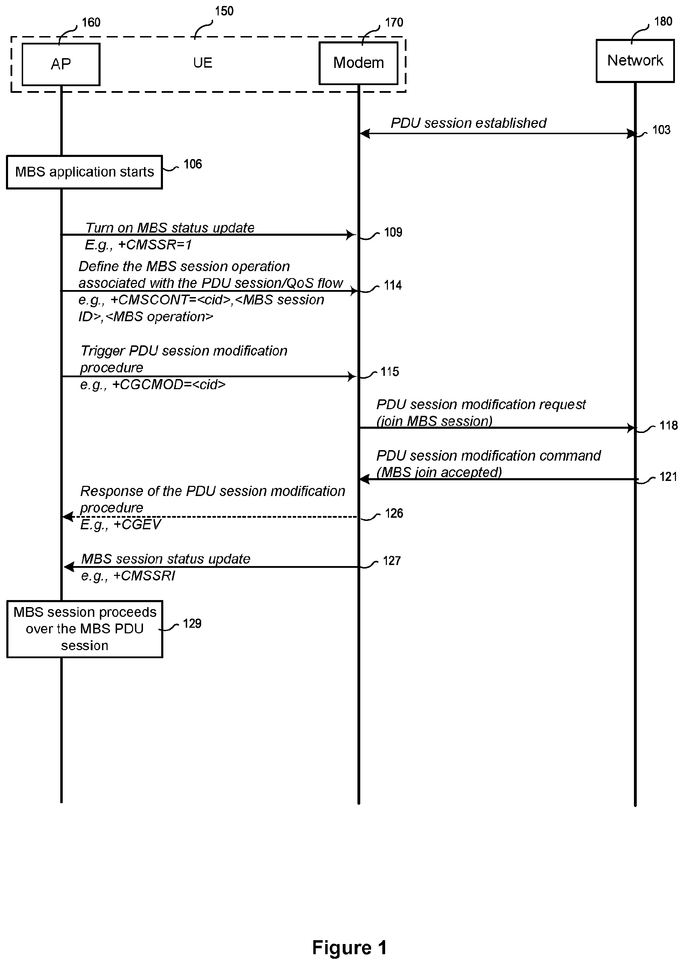

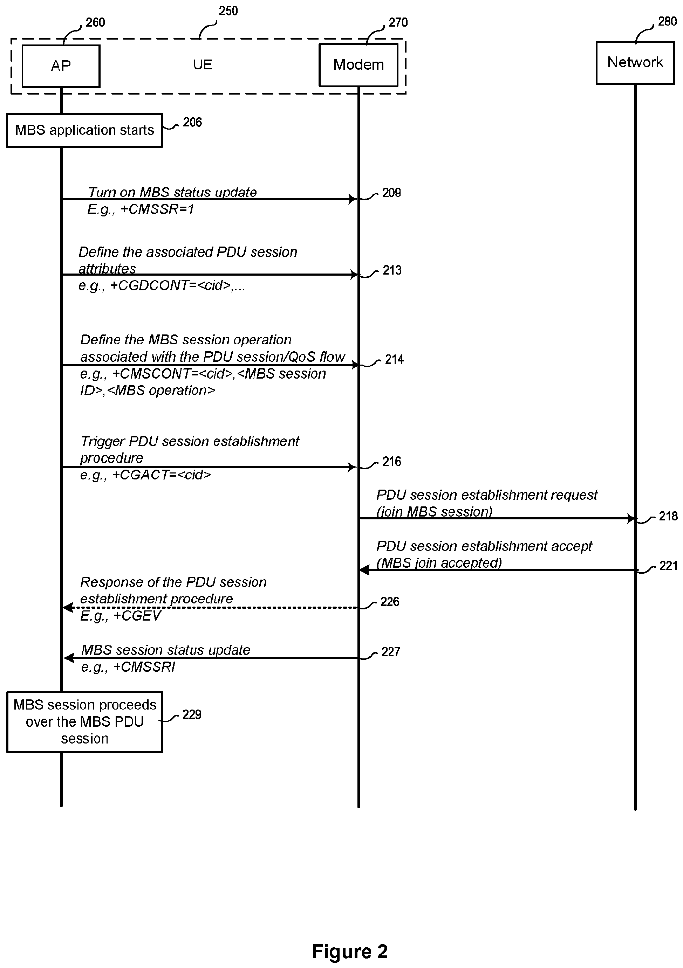

Figure 1 shows an example message flow for a UE to join an MBS session over an existing PDU session where an AP turns on the MBS status update and receives the status update from the modem, according to some implementations. As shown in Figure 1, a UE 150 includes an AP 160 and a modem 170. The MBS application is running at the AP side while the protocol (for example, 3GPP Non-Access-Stratum (NAS) protocol) for configuring the MBS session operation and exchange of parameters are implemented at the modem side. An interface between the AP 160 and the modem 170 enables the MBS service. For example, the interface includes a physical interface and/or software interface. The physical interface can include a Peripheral Component Interconnect Express (PCIe), shared memory or Universal Serial Bus (USB), and the software interface can be a remote procedure (RPC) call interface or an AT command interface. A similar interface that enables the MBS service can be implemented in Figures 2-6. In some implementations, a client software is run on the AP 160 and a server software is run on the modem 170 to enable communication (e.g., the commands described below) between the AP 160 and modem 170 via the interface.

As shown in Figure 1, a PDU session suitable for the MBS service is established 103. The MBS application starts 106 and the AP 160 turns on or enables 109 the MBS session status update from the modem 170. The MBS status update may also be referred to as the MBS session status reporting. In some implementations, the AP 160 enables the MBS session status update or reporting by transmitting an AT command to the modem 170 that includes an MBS session status setting. The AT command can be a set AT command, such as an MBS session status reporting (+CMSSR=) command, that is sent from the AP 160 to the modem 170. The MBS session status setting controls the MBS status reporting for an MBS session. In some implementations, the MBS session status setting either enables or disables the MBS status reporting for the MBS session. For example, the MBS sessions status setting can include a parameter that can be set by the AP 160 to either enable or disable the MBS status reporting.

The AP 160 then checks whether there's a suitable PDU session established. To check whether there's a suitable PDU session exists, the AP 160 can read the DNN and the S-NSSAI of all the existing PDU sessions (such as by +CGCONTRDP command) and determine whether the DNN and the S-NSSAI match the required setting for the MBS session. If a suitable PDU session exists, the AP 160 can send 114 an AT command, such as an +CMSCONT command, to the modem 170 to define or set the MBS session context including the MBS session operation (i.e., join MBS session). For example, the +CMSCONT command can be a set AT command, such as a +CMSCONT= command. The AT command can include a CID identifying the PDU session, an MBS session ID, and an MBS operation. The set AT command can also include an MBS session ID type. In some implementations, the modem 170 responds with an "OK" response message (not shown). For example, the AP 160 can wait for the OK response message before proceeding with a next AT command. The AP 160 triggers the PDU session modification procedure by communicating 115 an AT command to the modem 170, such as a +CGCMOD command. The modem 170 can request 118 to join the MBS session by a NAS messages, such as a PDU session modification request message. The network accepts 121 the MBS join request and returns a PDU session modification command message indicating the MBS join request is accepted. In some implementations, the modem 170 sends 126 a response message for the PDU session modification procedure to the AP 160. For example, the response message can be an AT command, such as a +CGEV command, to indicate the outcome of the MBS join session. In some implementations, the response message shown in element 126 is optional. In some implementations, the AP 160 waits for an OK message (not shown) before proceeding to the next step.

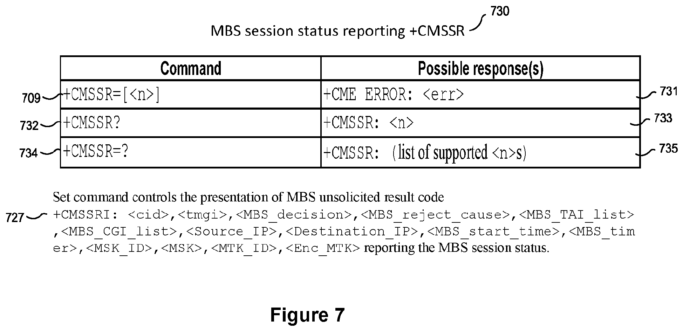

After the PDU session modification procedure is finished, the modem 170 sends 127 an AT command, such as a +CMSSRI command, that includes an MBS session status update, which also may be referred to as an MBS session status report. In some implementation, the AT command is an unsolicited AT command that includes the MBS session status report. The modem 170 can send the AT command when the modem 170 detects a change in one or more parameters that indicate the MBS session status of the MBS session. In some implementations, the one or more parameters of the MBS session status report include an MBS decision (MBS_decision) and an MBS reject cause (MBS_reject_cause). The MBS decision can indicate a network decision affecting the MBS session. For example, the MBS decision can indicate whether an MBS join request is accepted, an MBS join request is rejected, or the UE 150 is being removed from the MBS session. The MBS reject cause can indicate either a reason for rejecting the MBS session or a reason for removing the UE 150 from the MBS session. In some implementations, the one or more parameters of the MBS session status report include one or more of a context identifier (CID), a temporary mobile group identity (TMGI), the MBS decision (MBS_decision), the MBS reject cause (MBS_reject_cause), an MBS tracking area identity list (MBS_TAI_list), an MBS cell global identifier list (MBS_CGI_list), a source IP address (Source_IP), a destination address (Destination_IP), an MBS start time (MBS_Start_Time), an MBS timer (MBS_timer), an MBS service key identifier (MSK_ID), an MBS service key (MSK), an MBS traffic key identifier (MTK_ID), and an encrypted MBS traffic key (Enc _MTK), as further described below with reference to Figure 7.

As described previously, the MBS session status setting controls whether the MBS session status reporting is enabled or disabled. In some implementations, the modem 170 checks whether the MBS session status reporting is enabled before sending the AT command. If the MBS session status reporting is enabled, the modem 170 can send the AT command including the MBS session status report. If the MBS status reporting is disabled, the modem 170 does not send the MBS session status report. The MBS session can proceed 129 over the MBS PDU session.

**Figure 2** shows an example message flow for a UE 250 to establish a new PDU session that supports an MBS session and an AP 260 turns on the MBS status update and receives the status update from a modem 270, according to some implementations. In the example of Figure 2, the MBS application starts 206 and then checks whether there's a suitable PDU session established. The AP 260 can determine there is no suitable PDU session existing when the MBS application starts. Similar to element 109 of Figure 1, the AP 260 can turn on or enable 209 the MBS session status update (or the MBS session status reporting) from the modem 270. The AP 260 configures a suitable PDU session by sending 213 an AT command to the modem 370, such as a +CGDCONT= command that indicates a CID and the corresponding DNN and S-NSSAI for the MBS session. Similar to element 114 in Figure 1, the AP 260 can subsequently send an AT command, such as an +CMSCONT command, to the modem 270 to define or set the MBS session context including the MBS session operation (i.e., join MBS session).

After the parameters for the PDU session establishment and the MBS PDU session are configured, the AP 260 triggers the PDU session establishment procedure for the MBS PDU session by communicating an AT command, such as a +CGACT command, to the modem 270. The modem 270 can send 218 a PDU session establishment request message to the network 280 to complete the PDU session establishment procedure and request to join the MBS session. The network 280 accepts the MBS join request and returns 221 a PDU session establishment accept message indicating the MBS join request is accepted. In some implementations, the modem 270 sends 226 a response message for the PDU session establishment procedure to the AP 260. For example, the response message can be an AT command, such as a +CGEV command, to indicate the outcome of the MBS join session. In some implementations, the response message shown in element 226 is optional. Similar to element 127 of Figure 1, after receipt of the indication that MBS join request is accepted in the PDU session establishment procedure, the modem 270 sends 227 an AT command, such as a +CMSSRI command, that includes an MBS session status update, which also may be referred to as an MBS session status report. The MBS session can proceed 229 over the MBS PDU session.

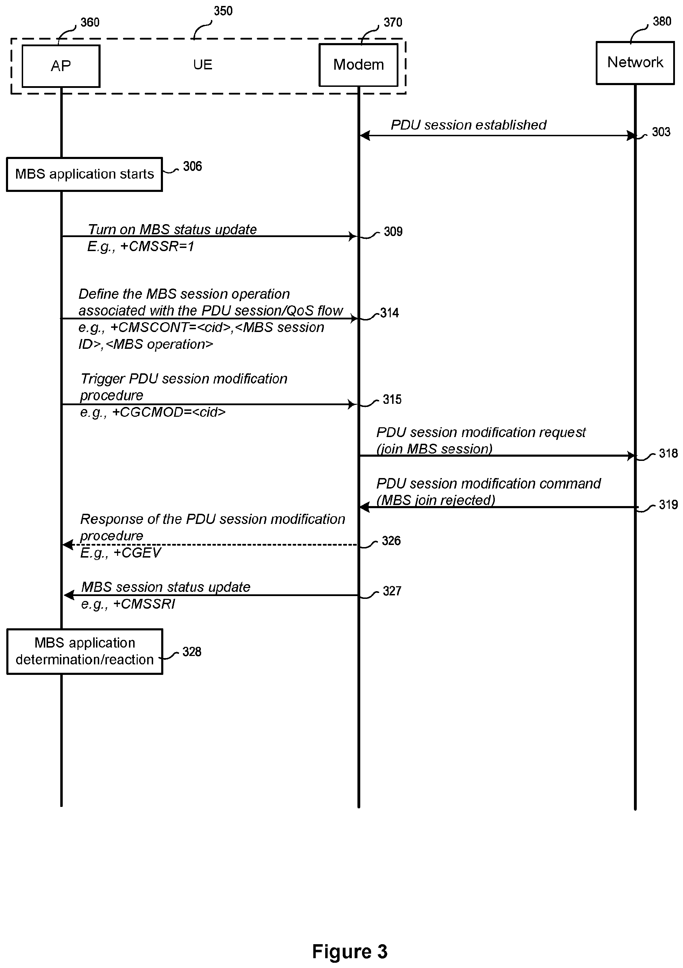

**Figure 3** shows an example message flow for a UE 350 to join an MBS session over an existing PDU session but the network rejects the MBS join request, and an AP 360 receives an MBS status update from a modem 370, according to some implementations. Figure 3 elements 314 - 318 are similar to their counterparts in Figure 1 elements 124 - 118. As shown in Figure 3, the network 380 can reject the MBS join request by sending 319 a PDU session modification command message indicating that the MBS join request is rejected. The network 380 can reject the MBS join request based on a condition, such as when UE 350 is not within the service area, when the UE 350 is not authorized/no subscription, when the MBS service is not started yet or otherwise unavailable, or due to congestion control/resource limitation, among other examples. In some implementations, the modem 370 sends 326 an AT command, such as a +CGEV command, as a response message to indicate the outcome of the MBS join session. In some implementations, the response message shown in element 326 is optional. Similar to element 127 of Figure 1, the modem 370 can send 327 an AT command to the AP 360, such as a +CMSSRI command, that includes an MBS session status update, which also may be referred to as an MBS session status report. In some implementations, in the MBS session status report, the AP 360 receives an indication from the modem 370 about the failure cause, the MBS start time, the back-off timer and/or the MBS service area information. The AP 360 can proceed 328 with the MBS application determination or reaction associated with the MBS PDU session.

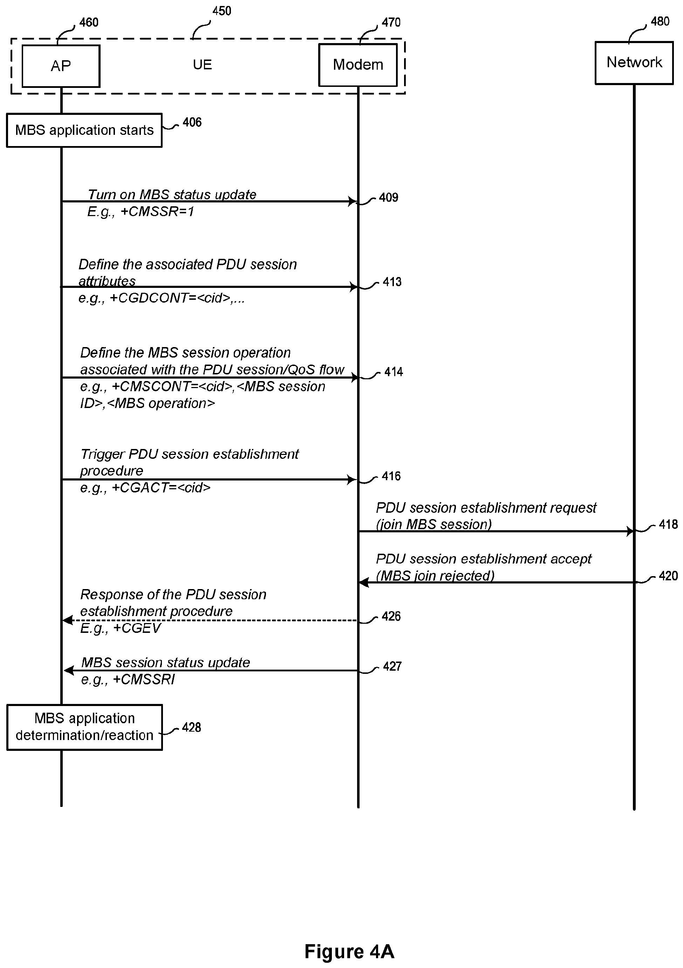

**Figure 4A** shows an example message flow for a UE 450 to join an MBS session and establish a new PDU session that supports the MBS session but a network 480 rejects the MBS join request, and an AP 460 receives an MBS status update from a modem 470, according to some implementations. Figure 4A elements 406 - 418 are similar to their counterparts in Figure 2 elements 206 - 218. In the example depicted in Figure 4A, the network 480 can reject the MBS join request by transmitting 420 a PDU session establishment accept message. The network 480 can reject the MBS join request based on a condition, such as when UE 450 is not within the service area, when the UE 450 is not authorized/no subscription, when the MBS service is not started yet or otherwise unavailable, or due to congestion control/resource limitation, among other examples. In the example of Figure 4A, the network 480 can establish a PDU session while concurrently rejecting the MBS join request. In some implementations, the modem 470 sends 426 an AT command, such as a +CGEV command, as a response message to indicate the outcome of the MBS join session. In some implementations, the response message shown in element 426 is optional. Similar to element 127 of Figure 1, the modem 470 can send 427 an AT command to the AP 460, such as a +CMSSRI command, that includes an MBS session status update, which also may be referred to as an MBS session status report. The AP 460 can proceed 428 with the MBS application determination or reaction associated with the MBS PDU session.

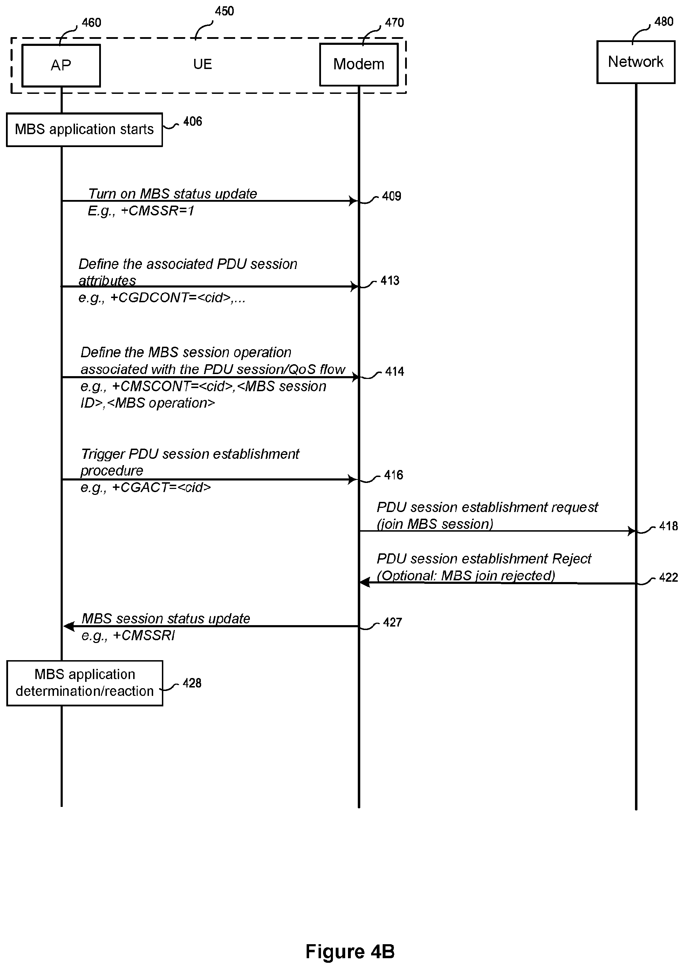

**Figure 4B** shows another example message flow for the UE 450 to join an MBS session and establish a new PDU session that supports the MBS session but the network 480 rejects the MBS join request, and an AP 460 receives an MBS status update from a modem 470, according to some implementations. Figure 4B elements 406 - 418 are similar to their counterparts in Figure 2 elements 206 - 218. In this case, the network 480 can determine that the PDU session establishment is unnecessary and thus reject the PDU session establishment by sending 422 a PDU session establishment reject message to the modem 470. In some implementation, the network 480 includes the Received MBS container information element to the UE 450 indicating the failure cause, the MBS start time, the back-off timer and/or the MBS service area information. The AP 460 can proceed 428 with the MBS application determination or reaction associated with the MBS PDU session.

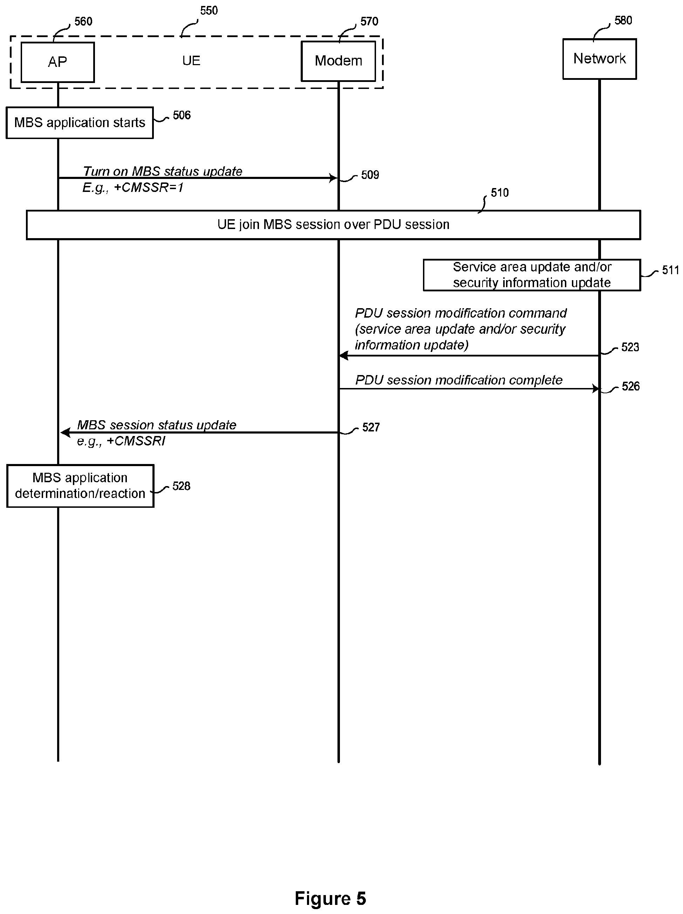

**Figure 5** shows an example message flow in which the network 580 updates the MBS parameters and an AP 560 of a UE 550 receives an MBS status update from a modem 570, according to some implementations. Figure 5 elements 506 - 509 are similar to their counterparts in Figure 1 elements 106 - 109. The UE 550 can join 510 an MBS session over an existing PDU session that supports one or more MBS sessions. In Figure 5, the network 580 updates the MBS parameters of an active MBS session. The network 580 updates 511 the MBS session parameter, such as service area or security information. The network 580 can perform a PDU session modification procedure. For example, the network 580 can send 523 a PDU session modification command to indicate the updated parameters to the modem 570. The modem 570 can respond to the PDU session modification command by transmitting 526 a PDU session modification complete message. Similar to element 127 of Figure 1, after the PDU session modification procedure is finished, the modem 570 can send 527 an AT command to the AP 560, such as a +CMSSRI command, that includes an MBS session status update, which also may be referred to as an MBS session status report. The AP 560 receives the MBS session status report that includes an indication from the modem 570 about the updated parameters, such updates relating to the MBS service area and/or security information. The AP 560 can proceed 528 with the MBS application determination or reaction associated with the MBS PDU session.

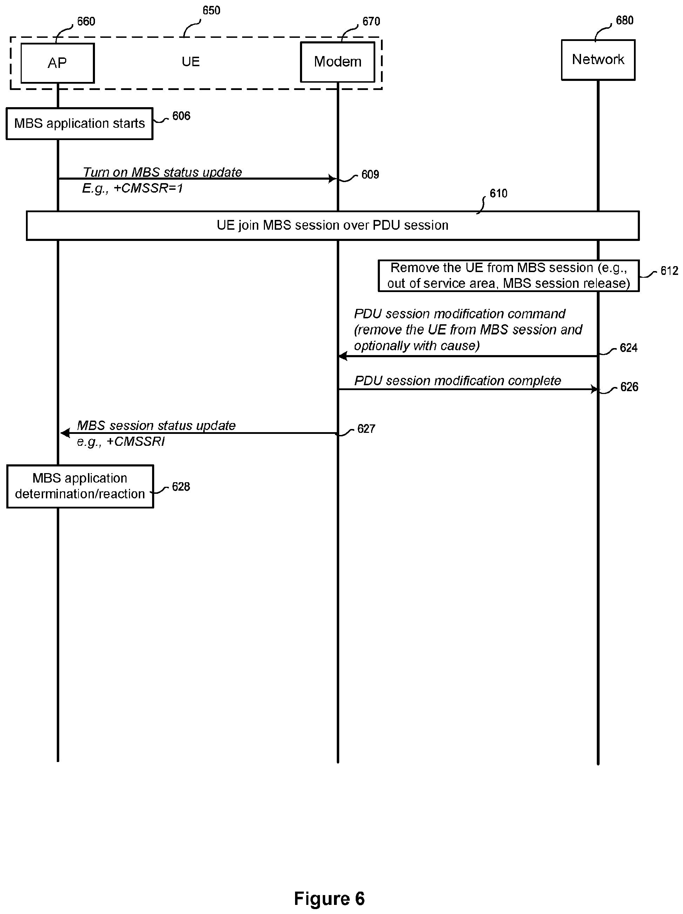

**Figure 6** shows an example message flow in which the network 680 removes the UE from the MBS session and an AP 660 of a UE 650 receives an MBS status update from a modem 670, according to some implementations. Figure 6 elements 606 - 609 are similar to their counterparts in Figure 1 elements 106 - 109. The UE 650 can join 610 an MBS session over an existing PDU session that supports one or more MBS sessions. In Figure 6, the network 680 removes 612 the UE 650 from an MBS session. The network 680 can remove the MBS session based on a condition (such as the UE 650 being outside of the MBS service area, the MBS session being terminated, the UE subscription being expired/ended, or congestion control/resource limitation, among other examples). For example, the network 680 can determine to remove the UE from the MBS session, such as due to the UE 650 being outside the service area, subscription update, or MBS session being released, among other reasons. The network 680 can trigger the PDU session modification procedure by sending 624 a PDU session modification command including an indication of the removal decision and optionally with a cause and/or updated parameters (such as the MBS service area and the MBS session start time). The modem 670 can respond to the PDU session modification command by transmitting 626 a PDU session modification complete message. Similar to element 127 of Figure 1, after the PDU session modification procedure is finished, the modem 670 can send 627 an AT command to the AP 660, such as a +CMSSRI command, that includes an MBS session status update, which also may be referred to as an MBS session status report. The AP 660 receives the MBS session status report that includes the indication from the modem 670 about the MBS session status (for example, inactive status) and optionally with a cause and/or updated parameters (such as the MBS service area, the MBS session start time, and the back-off timer). The AP 660 can proceed 628 with the MBS application determination or reaction associated with the MBS PDU session.

Although not illustrated in Figures 4A-7, some implementations of the protocol between the modem and the AP can include additional messages. For example, when the modification procedure is successful (as in element 318 of Figure 3) or the PDU session establishment procedure is successful (as in element 418 of Figure 4A), the modem can send an "OK" command indicating the outcome of the PDU session. Additionally, or alternatively, the modem can send a command (such as an AT +CGEV command) to indicate the outcome of the rejected MBS join request. In some implementations, the OK command for the PDU session precedes or follows the +CGEV command. In some implementations, an OK message (from the modem or the AP) is used as an acknowledgement responsive to receiving a command (from the other one of the modem or the AP). In some implementations, a status update command is acknowledged by an OK command.

**Figure 7** shows an example AT command for MBS session status reporting and having a +CMSSR command syntax 730, according to some implementations. The +CMSSR= command 709 can be a set AT command that is sent from the AP to the modem to control MBS session status reporting for an MBS session. The +CMSSR= command 709 includes an MBS session status setting that either enables or disables the MBS session status reporting from the modem. For example, the MBS session status setting can include a parameter n that can be set to either 0 to disable the MBS session status reporting, or to 1 to enable the MBS session status report. If there is an error in configuring the MBS session status setting, an error response message can be received from the modem, such as a +CME ERROR message 731. The +CME ERROR message 731 can include one or more error (err) values to indicate one or more types of errors.

The +CMSSRI command 727 is an AT command that includes an MBS session status report for an MBS session. The modem determines whether to send the +CMSSRI command 727 to the AP depending on whether the MBS session status setting is enabled or disabled (as described previously). In some implementation, the +CMSSRI command 727 is an unsolicited AT command that includes the MBS session status report. The modem can send the +CMSSRI command 727 when it detects a change in one or more parameters that indicate the MBS session status of the MBS session. In some implementations, the one or more parameters of the MBS session status report include an MBS decision (MBS_decision) and an MBS reject cause (MBS reject cause). The MBS decision can indicate a network decision affecting the MBS session. For example, the MBS decision can indicate (0) an MBS service area update, (1) an MBS join request is accepted, (2) an MBS join request is rejected, or (3) the UE is being removed from the MBS session. The MBS reject cause can indicate either a reason for rejecting the MBS session or a reason for removing the UE from the MBS session. For example, the MBS reject cause can indicate (0) no additional information provided, (1) insufficient resources, (2) user is not authorized to use MBS service, (3) MBS session has not started or will not start soon, (4) user is outside of local MBS service area, (5) session context not found, or (6) MBS session is released.

In some implementations, the one or more parameters of the MBS session status report include one or more of a context identifier (CID), a temporary mobile group identity (TMGI), the MBS decision (MBS_decision), the MBS reject cause (MBS_reject_cause), an MBS tracking area identity list (MBS_TAI_list), an MBS cell global identifier list (MBS_CGI_list), a source IP address (Source_IP), a destination address (Destination_IP), an MBS start time (MBS_Start_Time), an MBS timer (MB S_timer), an MBS service key identifier (MSK_ID), an MBS service key (MSK), an MBS traffic key identifier (MTK_ID), and an encrypted MBS traffic key (Enc_MTK).

The +CMSSRI? command 732 can be a read AT command that requests a current value (or parameter n) of the MBS session status setting for the MBS session. The modem can respond with a response message 733 that indicates the current value (or parameter n) of the MBS session status setting. The +CMSSRI=? command 734 can be a test AT command that requests a list of supported values (such as the supported values for parameter n) for the MBS session status setting. The modem can respond with a response message 735 that indicate the list of the supported values (such as the supported values for parameter n) for the MB S session status setting.

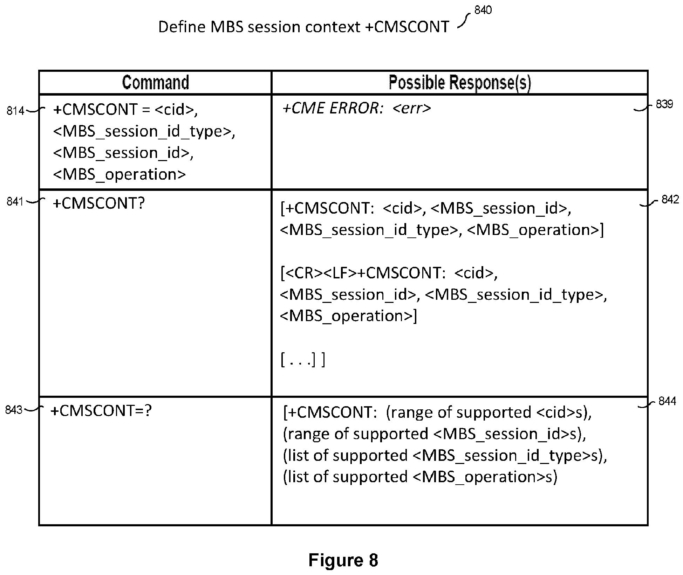

**Figures 8-11** include examples of interface commands (referred to as attention, or AT, commands). The example AT commands can be used by an AP of a UE to communicate with a modem of the UE.

**In** **Figure 8****,** an example AT command has a +CMSCONT command syntax 840 that can define or set an MBS PDU session, according to some implementations. The +CMSCONT= command 814 is a set AT command that is used to define or set the MBS session context of the MBS PDU session. As shown in Figure 8, the +CMSCONT= command 814 includes various parameters for the MBS PDU session including a CID, an MBS session ID, an MBS session ID type, and an MBS operation. If there is an error in setting or defining the MBS session context, an error response message can be received from the modem, such as a +CME ERROR message 839. The +CME ERROR message 839 can include one or more error (err) values to indicate one or more types of errors. The +CMSCONT? command 841 is a read AT command that is used to read the parameters of a current setting for one or more MBS sessions. As shown in Figure 8, the modem can respond to the +CMSCONT? command 841 received from the AP by sending a response message 842 including the various parameters of the current setting for the one or more MBS sessions.

In some implementations, a CID field of the +CMSCONT= command 814 indicates a quality of service (QoS) flow definition, an evolved packet system (EPS) traffic flow definition, and a packet data protocol (PDP) context definition. In some implementations, an MBS session ID field of the +CMSCONT= command 814 indicates the MBS session ID for Internet Protocol version 4 (IPv4) and Internet Protocol version 6 (IPv6) multicast addresses having a format that includes a source IP_address and a destination_IP_address. In some implementations, an MBS session ID type field of the +CMSCONT= command 814 is populated with either a first value to indicate a temporary mobile group identity (TMGI), a second value to indicate a source specific IP multicast address for IPv4, or a third value to indicate a source specific IP multicast address for IPv6. In some implementations, an MBS operation field of the +CMSCONT= command 814 is populated with either a first value to indicate joining the MBS PDU session or a second value to indicate leaving the MBS PDU session.

The +CMSCONT=? command 843 is a test AT command that is used to request the modem to return the ranges of the supported parameters (for the MBS PDU session) as compound values. As shown in Figure 8, the modem can respond to the +CMSCONT=? command 843 received from the AP by sending a response message 844 including the ranges of the supported parameters for the MBS PDU session.

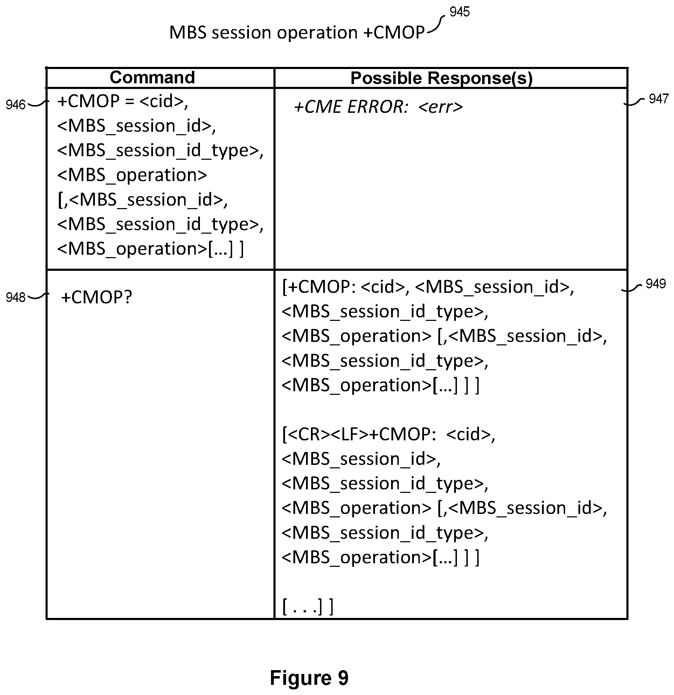

**In** **Figure 9****,** an example AT command is shown having a +CMOP command syntax 945 that can both define or set the MBS session context for the MBS PDU session and trigger a PDU session modification procedure, according to some implementations. As shown in Figure 9, the +CMOP= command 946 includes various parameters for the MBS PDU session including a CID, an MBS session ID, an MBS session ID type, and an MBS operation. If there is an error in setting or defining the MBS session context, an error response message can be received from the modem, such as a +CME ERROR message 947. The +CME ERROR message 947 can include one or more error (err) values to indicate one or more types of errors. The + CMOP? command 948 is a read AT command that is used to read the parameters of a current setting for one or more MBS sessions. As shown in Figure 9, the modem can respond to the + CMOP? command 948 received from the AP by sending a response message 949 including the various parameters of the current setting for the one or more MBS sessions.

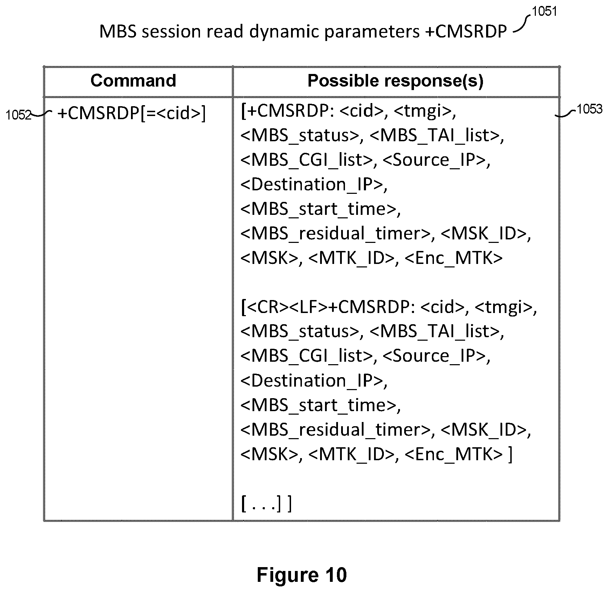

In **Figure 10****,** an example AT command is shown having a +CMSRDP command syntax 1051 that can query the status of one or more active MBS session, according to some implementations. As shown in Figure 10, the query command can be an execution AT command, such as an +CMSRDP= command 1052, that reads dynamic parameters for one or more MBS sessions. The +CMSRDP= command 1052 can include a CID of the MBS PDU session in order to identify the specific MBS PDU session. In some implementations, the dynamic parameters can include the CID, a TMGI, an MBS_TAI_list, an MBS_CGI_list, a Source _IP, a Destination_IP, an MBS_Start_Time, an MBS_residual_timer, an MSK, an MSK_ID, an MTK_ID, and an Enc_MTK. As shown in Figure 10, the modem can respond to the + CMSRDP= command 1052 received from the AP by sending a response message 1053 including the various dynamic parameters for the one or more active MBS sessions associated with the CID.

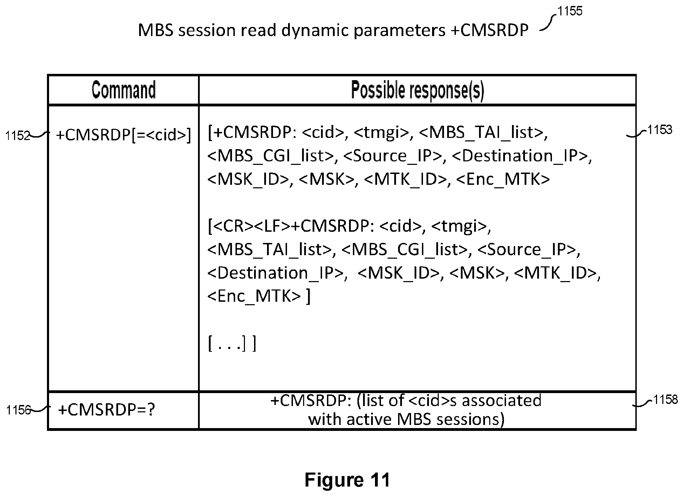

In **Figure 11****,** an example AT command is shown having a +CMSRDP command syntax 1155 that can query the status of one or more active MBS sessions, according to some implementations. As shown in Figure 11, the query command can be an execution AT command, such as an +CMSRDP= command 1152, that reads dynamic parameters for one or more MBS sessions. The +CMSRDP= command 1152 can include a CID of the MBS PDU session in order to identify the specific MBS PDU session. In some implementations, the dynamic parameters can include the CID, a TMGI, an MBS_TAT_list, an MBS_CGT_list, a Source _IP, a Destination_IP, an MSK, an MSK_ID, an MTK_ID, and an Enc_MTK. As shown in Figure 11, the modem can respond to the +CMSRDP= command 1152 received from the AP by sending a response message 1153 including the various dynamic parameters for the one or more active MBS sessions associated with the CID. The +CMSRDP=? command 1156 is a test AT command that is used to request the modem to return a list of CIDs associated with the one or more active MBS PDU sessions. As shown in Figure 11, the modem can respond to the +CMSRDP=? command 1156 received from the AP by sending a response message 1158 including the list of CIDs associated with the one or more active MBS PDU sessions.

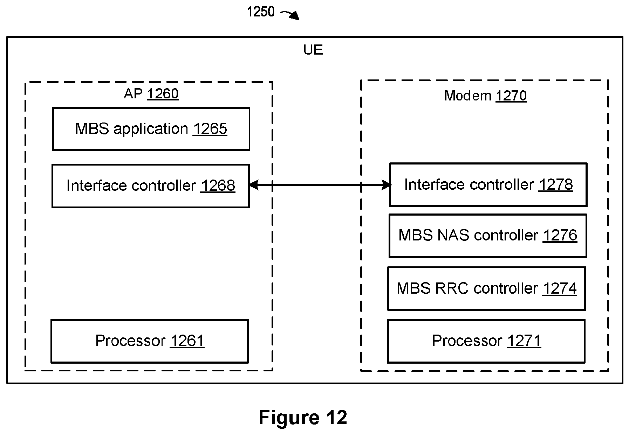

**Figure 12** is an example UE 1250 including an AP 1260 and a modem 1270, which may be an example implementation of the UEs described above in Figures 1-6. The modem 1270 includes a processor 1271, an MBS RRC controller 1274, an MBS NAS controller 1276 and an interface controller 1278. The processor 1271 process data that the UE 1250 will transmit in the uplink direction, or processes data received by UE 1250 in the downlink direction. The MBS Radio Resource Controller (RRC) controller 1274 can be configured to support RRC configurations, procedures and messaging associated with MBS procedures, and/or to support the necessary operations. The MBS NAS controller 1276 can be configured to support NAS configurations, procedures and messaging associated with MBS procedures, and/or to support the necessary operations. The interface controller 1278 manages communication of messages (e.g., AT commands and/or RPC function calls) exchanged between the modem 1270 and AP 1260.

The AP 1260 includes a processor 1261, an interface controller 1268 and an MBS application 1265. The processor 1261 is configured to run an operating system (e.g., Android, iOS, Windows or Linux). The interface controller 1268 manages communication of messages (e.g., AT commands and/or RPC function calls) exchanged between the modem 1270 and AP 1260. The interface controller 1268 can be run on the processor 1261. The MBS application 1265 is configured to receive one or more MBS services. For example, the MBS application 1265 includes an IP streaming application or software update application.

In some implementations, the modem 1270 may be referred to as a terminal adapter (TA) and the AP 1260 may be referred as terminal equipment (TE).

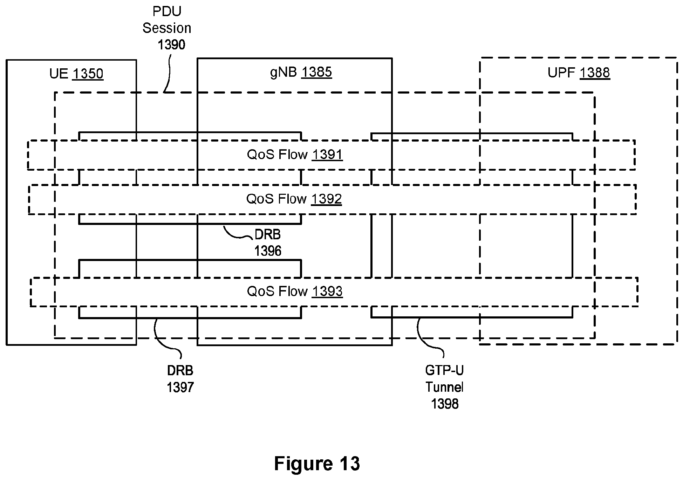

**Figure 13** is an example network, including a UE 1350, a Next Generation NodeB or gNodeB (gNB) 1385, and a User Plane Function (UPF) 1388, which may be an example network that implements the features described above in Figures 1-12. A PDU session 1390 can be established as described above with reference to Figures 1-7. As described previously, a PDU session 1390 that supports MBS can be referred to as an MBS PDU session. The PDU session 1390 can be implemented across the UE 1350, the gNB 1385 and the UPF 1388 via one or more data radio bearers (DRB) between the UE 1350 and the gNB 1385, such as DRB 1396 and DRB 1397, and a GTP-U tunnel 1398 between the gNB 1385 and the UPF 1388. The PDU session 1390 also includes one or more quality of service (QoS) flows, such as QoS flows 1391-1393. The MBS that is supported by the PDU session 1390 is also supported by the QoS flows 1391-1393, the DRB 1396, the DRB 1397, and the GTP-U tunnel 1398. Various MBS applications can be supported by the MBS PDU session, such as IP streaming applications, Voice-over-IP (VoIP) applications, and software update applications, among others.

The following additional considerations apply to this disclosure.

Example AT commands described herein include:
- +CMSCONT: Define MBS session context +CMSCONT, please refer to Fig 8.
- +CGCMOD: PDP context modify +CGCMOD.
- +CGEV: used to indicate bearer operations status.
- +CMSRDP: MBS session read dynamic parameters +CMSRDP, please refer to Figures 10 and 11.
- +CMOP: MBS session operation +CMOP, please refer to Figure 9.
- +CGACT: PDP context activate or deactivate +CGACT.

Although the AT commands above are used as examples to explain this disclosure, it should be noted that these examples can be applied to other interface(s) such as remote procedure call (RPC) interface(s). For example, an AT command sent by the AP to the modem can be replaced by one or more RPC function calls and the parameters (i.e., arguments) of the AT command are the arguments of the one or more RPC function calls. Return result(s) in a response of the AT command are return result(s) of the one or more RPC function calls. In another example, two or more AT commands can be combined as one single RPC function call and the parameters (i.e., arguments) of the AT commands are the arguments of the RPC function call. Return result(s) in responses of the AT commands are return results of the RPC function call.

Figures 1-13 and the operations described herein are examples meant to aid in understanding example implementations and should not be used to limit the potential implementations or limit the scope of the claims. Some implementations may perform additional operations, fewer operations, operations in parallel or in a different order, and some operations differently.

The foregoing disclosure provides illustration and description but is not intended to be exhaustive or to limit the aspects to the precise form disclosed.

Another innovative aspect of the subject matter described in this disclosure can be implemented as a wireless communication device of a UE. The wireless communication device may include at least one interface and a processing system communicatively coupled with the at least one interface. The processing system may be configured to implement any one of the above clauses.

Another innovative aspect of the subject matter described in this disclosure can be implemented as a portable electronic device comprising a wireless communication device, a plurality of antennas coupled to the at least one transceiver to wirelessly transmit signals output from the at least one transceiver and a housing that encompasses the wireless communication device, the at least one transceiver and at least a portion of the plurality of antennas. The wireless communication device may include at least one interface and a processing system communicatively coupled with the at least one interface. The processing system may be configured to implement any one of the above clauses.

Another innovative aspect of the subject matter described in this disclosure can be implemented as a machine-readable medium having processor-readable instructions stored therein that, when executed by a processing system of a UE, cause the UE to implement any one of the above clauses.

Another innovative aspect of the subject matter described in this disclosure can be implemented as an apparatus. The apparatus may include means for implementing any one of the above clauses.

A user device in which the techniques of this disclosure can be implemented (such as the UE) can be any suitable device capable of wireless communications such as a smartphone, a tablet computer, a laptop computer, a mobile gaming console, a point-of-sale (POS) terminal, a health monitoring device, a drone, a camera, a media-streaming dongle or another personal media device, a wearable device such as a smartwatch, a wireless hotspot, a femtocell, or a broadband router. In some implementations, the UE may be referred to as a terminal equipment (TE). Further, the user device in some cases can be embedded in an electronic system such as the head unit of a vehicle or an advanced driver assistance system (ADAS). Still further, the user device can operate as an internet-of-things (IoT) device or a mobile-internet device (MID). Depending on the type, the user device can include one or more general-purpose processors, a computer-readable memory, a user interface, one or more network interfaces, one or more sensors, etc.

Certain embodiments are described in this disclosure as including logic or a number of components or modules. Modules can be software modules (such as code stored on non-transitory machine-readable medium) or hardware modules. A hardware module is a tangible unit capable of performing certain operations and can be configured or arranged in a certain manner. A hardware module can comprise dedicated circuitry or logic that is permanently configured (such as a special-purpose processor, such as a field programmable gate array (FPGA) or an application-specific integrated circuit (ASIC)) to perform certain operations. A hardware module can also comprise programmable logic or circuitry (such as encompassed within a general-purpose processor or other programmable processor) that is temporarily configured by software to perform certain operations. The decision to implement a hardware module in dedicated and permanently configured circuitry, or in temporarily configured circuitry (such as configured by software) can be driven by cost and time considerations.

When implemented in software, the techniques can be provided as part of the operating system, a library used by multiple applications, a particular software application, etc. The software can be executed by one or more general-purpose processors or one or more special-purpose processors.

## Claims

1. A method for managing a multicast and broadcast service (MBS) protocol data unit (PDU) session (1390) by a user equipment (UE) (150, 250, 350, 450, 550, 650, 1250, 1350), comprising:
transmitting, from an application processor (AP) (160, 260, 360, 460, 560, 660, 1260) of the UE to a modem (170, 270, 370, 470, 570, 670, 1270) of the UE, a first attention (AT) command (109, 209, 309, 409, 509, 609, 709) indicating an MBS session status setting for an MBS session; and
receiving, from the modem, a second AT command (127, 227, 327, 427, 527, 627, 727) including an MBS session status report for the MBS session;
**characterised in that**
the MBS session status report includes an MBS decision (MBS_decision) indicating a network decision for the MBS session.

2. The method of claim 1, wherein:
the receiving the second AT command including the MBS session status report is in response to the modem detecting a change in one or more parameters that indicate an MBS session status of the MBS session.

3. The method of any one of claims 1-2, further comprising:
transmitting a third AT command (732) to the modem, the third AT command requesting a current value of the MBS session status setting for the MBS session; and
receiving a response message from the modem indicating the current value of the MBS session status setting for the MBS session, the current value indicating whether MBS session status reporting is enabled or disabled for the MBS session.

4. The method of any one of claims 1-3, further comprising:
transmitting a fourth AT command (734) to the modem, the fourth AT command requesting a list of supported values for the MBS session status setting.

5. A method for managing a multicast and broadcast service (MBS) protocol data unit (PDU) session (1390) by a user equipment (UE) (150, 250, 350, 450, 550, 650, 1250, 1350), comprising:
receiving, at a modem (170, 270, 370, 470, 570, 670, 1270) of the UE from an application processor (AP) (160, 260, 360, 460, 560, 660, 1260) of the UE, a first attention (AT) command (109, 209, 309, 409, 509, 609, 709) indicating an MBS session status setting for an MBS session; and
transmitting, from the modem to the AP, a second AT command (127, 227, 327, 427, 527, 627, 727) including an MBS session status report for the MBS session;
**characterised in that**
the MBS session status report includes an MBS decision (MBS_decision) indicating a network decision for the MBS session.

6. The method of claim 5, wherein:
the transmitting the second AT command including the MBS session status report is in response to the modem detecting a change in one or more parameters that indicate an MBS session status of the MBS session.

7. The method of any one of claims 5-6, further comprising:
receiving a third AT command (732) from the AP, the third AT command requesting a current value of the MBS session status setting for the MBS session; and
transmitting a response message from the modem to the AP indicating the current value of the MBS session status setting for the MBS session, the current value indicating whether MBS session status reporting is enabled or disabled for the MBS session.

8. The method of any one of claims 5-7, further comprising:
receiving a fourth AT command (734) from the AP, the fourth AT command requesting a list of supported values for the MBS session status setting.

9. The method of any one of claims 1-8, wherein:
the first AT command is a set AT command, and the MBS session status setting includes a parameter that controls MBS session status reporting from the modem for the MBS session.

10. The method of claim 9, wherein:
the MBS session status setting either enables or disables MBS session status reporting from the modem for the MBS session

11. The method of any one of claims 1-10, wherein:
the second AT command is an unsolicited AT command from the modem including the MBS session status report.

12. The method of any one of claims 1-11, wherein:
the MBS session status report further includes an MBS reject cause (MBS_reject_cause) indicating either a reason for rejecting the MBS session or a reason for removing the UE from the MBS session.

13. The method of any one of claims 2 or 6, wherein:
the MBS session status report further includes the one or more parameters indicating the MBS session status for the MBS session, the one or more parameters include one or more of a context identifier (CID), a temporary mobile group identity (TMGI), an MBS decision (MBS_decision), an MBS reject cause (MBS_reject_cause), an MBS tracking area identity list (MBS_TAI_list), an MBS cell global identifier list (MBS_CGI_list), a source IP address (Source_IP), a destination address (Destination_IP), an MBS start time (MBS_Start_Time), an MBS timer (MBS_timer), an MBS service key identifier (MSK_ID), an MBS service key (MSK), an MBS traffic key identifier (MTK_ID), and an encrypted MBS traffic key (Enc_MTK).

14. The method of any one of claims 1-13, wherein:
the first AT command is a +CMSSR command, and/or the second AT command is a +CMSSRI command.

15. A User Equipment (UE) (150, 250, 350, 450, 550, 650, 1250, 1350), comprising:
an application processor (AP) (160, 260, 360, 460, 560, 660, 1260); and
a modem (170, 270, 370, 470, 570, 670, 1270) coupled with the AP, wherein the AP and the modem are configured to perform any one of the methods of claims 1-14.

## Patentansprüche

1. Verfahren zum Verwalten einer Multicast- und Broadcast-Dienst- (MBS) Protokolldateneinheits- (PDU) -Sitzung (1390) durch eine Benutzerausrüstung (UE) (150, 250, 350, 450, 550, 650, 1250, 1350), umfassend:
Übertragen, von einem Anwendungsprozessor (AP) (160, 260, 360, 460, 560, 660, 1260) der UE an ein Modem (170, 270, 370, 470, 570, 670, 1270) der UE, eines ersten Attention- (AT) Befehls (109, 209, 309, 409, 509, 609, 709), der eine MBS-Sitzungsstatuseinstellung für eine MBS-Sitzung angibt; und
Empfangen, von dem Modem, eines zweiten AT-Befehls (127, 227, 327, 427, 527, 627, 727), der einen MBS-Sitzungsstatusbericht für die MBS-Sitzung beinhaltet;
**dadurch gekennzeichnet ist, dass**
der MBS-Sitzungsstatusbericht eine MBS-Entscheidung (MBS_decision) beinhaltet, die eine Netzwerkentscheidung für die MBS-Sitzung angibt.

2. Verfahren nach Anspruch 1, wobei:
Empfangen des zweiten AT-Befehls, der den MBS-Sitzungsstatusbericht beinhaltet, als Reaktion darauf erfolgt, dass das Modem eine Änderung in einem oder mehreren Parametern detektiert, die einen MBS-Sitzungsstatus der MBS-Sitzung angeben.

3. Verfahren nach einem der Ansprüche 1-2, ferner umfassend:
Übertragen eines dritten AT-Befehls (732) an das Modem, wobei der dritte AT-Befehl einen aktuellen Wert der MBS-Sitzungsstatuseinstellung für die MBS-Sitzung anfordert; und
Empfangen einer Antwortnachricht von dem Modem, die den aktuellen Wert der MBS-Sitzungsstatuseinstellung für die MBS-Sitzung angibt, wobei der aktuelle Wert angibt, ob MBS-Sitzungsstatusberichterstattung für die MBS-Sitzung aktiviert oder deaktiviert ist.

4. Verfahren nach einem der Ansprüche 1-3, ferner umfassend:
Übertragen eines vierten AT-Befehls (734) an das Modem, wobei der vierte AT-Befehl eine Liste von unterstützten Werten für die MBS-Sitzungsstatuseinstellung anfordert.

5. Verfahren zum Verwalten einer Multicast- und Broadcast-Dienst- (MBS) Protokolldateneinheits- (PDU) -Sitzung (1390) durch eine Benutzerausrüstung (UE) (150, 250, 350, 450, 550, 650, 1250, 1350), umfassend:
Empfangen, an einem Modem (170, 270, 370, 470, 570, 670, 1270) der UE von einem Anwendungsprozessor (AP) (160, 260, 360, 460, 560, 660, 1260) der UE, eines ersten Attention- (AT) Befehls (109, 209, 309, 409, 509, 609, 709), der eine MBS-Sitzungsstatuseinstellung für eine MBS-Sitzung angibt; und
Übertragen, von dem Modem an den AP, eines zweiten AT-Befehls (127, 227, 327, 427, 527, 627, 727), der einen MBS-Sitzungsstatusbericht für die MBS-Sitzung beinhaltet;
**dadurch gekennzeichnet ist, dass**
der MBS-Sitzungsstatusbericht eine MBS-Entscheidung (MBS_decision) beinhaltet, die eine Netzwerkentscheidung für die MBS-Sitzung angibt.

6. Verfahren nach Anspruch 5, wobei:
Übertragen des zweiten AT-Befehls, der den MBS-Sitzungsstatusbericht beinhaltet, als Reaktion darauf erfolgt, dass das Modem eine Änderung in einem oder mehreren Parametern detektiert, die einen MBS-Sitzungsstatus der MBS-Sitzung angeben.

7. Verfahren nach einem der Ansprüche 5-6, ferner umfassend:
Empfangen eines dritten AT-Befehls (732) von dem AP, wobei der dritte AT-Befehl einen aktuellen Wert der MBS-Sitzungsstatuseinstellung für die MBS-Sitzung anfordert; und
Übertragen einer Antwortnachricht von dem Modem an den AP, die den aktuellen Wert der MBS-Sitzungsstatuseinstellung für die MBS-Sitzung angibt, wobei der aktuelle Wert angibt, ob MBS-Sitzungsstatusberichterstattung für die MBS-Sitzung aktiviert oder deaktiviert ist.

8. Verfahren nach einem der Ansprüche 5-7, ferner umfassend:
Empfangen eines vierten AT-Befehls (734) von dem AP, wobei der vierte AT-Befehl eine Liste von unterstützten Werten für die MBS-Sitzungsstatuseinstellung anfordert.

9. Verfahren nach einem der Ansprüche 1-8, wobei:
der erste AT-Befehl ein Set-AT-Befehl ist und die MBS-Sitzungsstatuseinstellung einen Parameter beinhaltet, der MBS-Sitzungsstatusberichterstattung von dem Modem für die MBS-Sitzung steuert.

10. Verfahren nach Anspruch 9, wobei:
die MBS-Sitzungsstatuseinstellung MBS-Sitzungsstatusberichterstattung von dem Modem für die MBS-Sitzung entweder aktiviert oder deaktiviert.

11. Verfahren nach einem der Ansprüche 1-10, wobei:
der zweite AT-Befehl ein unaufgeforderter AT-Befehl von dem Modem ist, der den MBS-Sitzungsstatusbericht beinhaltet.

12. Verfahren nach einem der Ansprüche 1-11, wobei:
der MBS-Sitzungsstatusbericht ferner eine MBS-Ablehnungsursache (MBS_reject_cause) beinhaltet, die entweder einen Grund zum Ablehnen der MBS-Sitzung oder einen Grund zum Entfernen der UE aus der MBS-Sitzung angibt.

13. Verfahren nach einem der Ansprüche 2 oder 6, wobei:
der MBS-Sitzungsstatusbericht ferner den einen oder die mehreren Parameter beinhaltet, die den MBS-Sitzungsstatus für die MBS-Sitzung angeben, wobei der eine oder die mehreren Parameter einen oder mehrere von einer Kontextkennung (CID), einer temporären mobilen Gruppenidentität (TMGI), einer MBS-Entscheidung (MBS_decision), einer MBS-Ablehnungsursache (MBS_reject_cause), einer MBS-Tracking-Area-Identitätsliste (MBS_TAI_list), einer MBS-Zell-Globalkennungsliste (MBS_CGI_list), einer Quell-IP-Adresse (Source_IP), einer Zieladresse (Destination_IP), einer MBS-Startzeit (MBS_Start_Time), einem MBS-Timer (MBS_timer), einer MBS-Dienstschlüsselkennung (MSK_ID), einem MBS-Dienstschlüssel (MSK), einer MBS-Verkehrsschlüsselkennung (MTK_ID) und einem verschlüsselten MBS-Verkehrsschlüssel (Enc_MTK) beinhalten.

14. Verfahren nach einem der Ansprüche 1-13, wobei:
der erste AT-Befehl ein +CMSSR-Befehl ist und/oder der zweite AT-Befehl ein +CMSSRI-Befehl ist.

15. Benutzerausrüstung (UE) (150, 250, 350, 450, 550, 650, 1250, 1350), umfassend:
einen Anwendungsprozessor (AP) (160, 260, 360, 460, 560, 660, 1260); und
ein Modem (170, 270, 370, 470, 570, 670, 1270), das mit dem AP gekoppelt ist, wobei der AP und das Modem konfiguriert sind, eines der Verfahren der Ansprüche 1-14 durchzuführen.

## Revendications

1. Procédé de gestion d'une session d'unité de données de protocole (PDU) de service de multidiffusion et de diffusion (MBS) (1390) par un équipement utilisateur (UE) (150, 250, 350, 450, 550, 650, 1250, 1350), comprenant :
la transmission, depuis un processeur d'application (AP) (160, 260, 360, 460, 560, 660, 1260) de l'UE vers un modem (170, 270, 370, 470, 570, 670, 1270) de l'UE, d'une commande de première attention (AT) (109, 209, 309, 409, 509, 609, 709) indiquant un réglage d'état de session MBS pour une session MBS ; et
la réception, depuis le modem, d'une deuxième commande AT (127, 227, 327, 427, 527, 627, 727) comportant un rapport d'état de session MBS pour la session MBS ;
**caractérisé en ce que**
le rapport d'état de session MBS comporte une décision MBS (MBS_decision) indiquant une décision de réseau pour la session MBS.

2. Procédé selon la revendication 1, dans lequel :
la réception de la deuxième commande AT comportant le rapport d'état de session MBS a lieu en réponse à la détection par le modem d'un changement dans un ou plusieurs paramètres indiquant un état de session MBS de la session MBS.

3. Procédé selon l'une quelconque des revendications 1 et 2, comprenant en outre :
la transmission d'une troisième commande AT (732) au modem, la troisième commande AT demandant une valeur actuelle du réglage d'état de session MBS pour la session MBS ; et
la réception d'un message de réponse du modem indiquant la valeur actuelle du réglage d'état de session MBS pour la session MBS, la valeur actuelle indiquant si l'émission de rapports d'état de session MBS est activée ou désactivée pour la session MBS.

4. Procédé selon l'une quelconque des revendications 1 à 3, comprenant en outre :
la transmission d'une quatrième commande AT (734) au modem, la quatrième commande AT demandant une liste de valeurs prises en charge pour le réglage d'état de session MBS.

5. Procédé de gestion d'une session (1390) d'unité de données de protocole (PDU) de service de multidiffusion et de diffusion (MBS) par un équipement utilisateur (UE) (150, 250, 350, 450, 550, 650, 1250, 1350), comprenant :
la réception, au niveau d'un modem (170, 270, 370, 470, 570, 670, 1270) de l'UE, depuis un processeur d'application (AP) (160, 260, 360, 460, 560, 660, 1260) de l'UE, d'une première commande d'attention (AT) (109, 209, 309, 409, 509, 609, 709) indiquant un réglage d'état de session MBS pour une session MBS ; et
la transmission, depuis le modem vers l'AP, d'une deuxième commande AT (127, 227, 327, 427, 527, 627, 727) comportant un rapport d'état de session MBS pour la session MBS ;
**caractérisé en ce que**
le rapport d'état de session MBS comporte une décision MBS (MBS_decision) indiquant une décision de réseau pour la session MBS.

6. Procédé selon la revendication 5, dans lequel :
la transmission de la deuxième commande AT comportant le rapport d'état de session MBS a lieu en réponse à la détection par le modem d'un changement dans un ou plusieurs paramètres indiquant un état de session MBS de la session MBS.

7. Procédé selon l'une quelconque des revendications 5 et 6, comprenant en outre :
la réception d'une troisième commande AT (732) depuis l'AP, la troisième commande AT demandant la valeur actuelle du réglage d'état de session MBS pour la session MBS ; et
la transmission d'un message de réponse depuis le modem vers l'AP indiquant la valeur actuelle du réglage d'état de session MBS pour la session MBS, la valeur actuelle indiquant si l'émission de rapports d'état de session MBS est activée ou désactivée pour la session MBS.

8. Procédé selon l'une quelconque des revendications 5 à 7, comprenant en outre :
la réception d'une quatrième commande AT (734) depuis l'AP, la quatrième commande AT demandant une liste des valeurs prises en charge pour le réglage d'état de session MBS.

9. Procédé selon l'une quelconque des revendications 1 à 8, dans lequel :
la première commande AT est une commande AT de réglage, et le réglage d'état de session MBS comporte un paramètre qui commande l'émission de rapports d'état de session MBS depuis le modem pour la session MBS.

10. Procédé selon la revendication 9, dans lequel :
le réglage d'état de session MBS active ou désactive l'émission de rapports d'état de session MBS depuis le modem pour la session MBS.

11. Procédé selon l'une quelconque des revendications 1 à 10, dans lequel :
la deuxième commande AT est une commande AT non sollicitée provenant du modem comportant le rapport d'état de session MBS.

12. Procédé selon l'une quelconque des revendications 1 à 11, dans lequel :
le rapport d'état de session MBS comporte en outre un motif de rejet MBS (MBS_reject_cause) indiquant soit une raison de rejet de la session MBS, soit une raison de retrait de l'UE de la session MBS.

13. Procédé selon l'une quelconque des revendications 2 à 6, dans lequel :
le rapport d'état de session MBS comporte en outre les un ou plusieurs paramètres indiquant l'état de la session MBS pour la session MBS, les un ou plusieurs paramètres comportent l'un ou plusieurs des éléments suivants : un identifiant de contexte (CID), une identité de groupe mobile temporaire (TMGI), une décision MBS (MBS_decision), un motif de rejet MBS (MBS_reject_cause), une liste d'identifiants de zones de suivi MBS (MBS_TAI_list), une liste d'identifiants globaux de cellules MBS (MBS_CGI_list), une adresse IP source (Source_IP), une adresse de destination (Destination_IP), une heure de début de la session MBS (MBS_Start_Time), un temporisateur MBS (MBS_timer), un identifiant de clé de service MBS (MSK_ID), une clé de service MBS (MSK), un identifiant de clé de trafic MBS (MTK_ID) et une clé de trafic MBS chiffrée (Enc_MTK).

14. Procédé selon l'une quelconque des revendications 1 à 13, dans lequel :
la première commande AT est une commande +CMSSR, et/ou la deuxième commande AT est une commande +CMSSRI.

15. Équipement utilisateur (UE) (150, 250, 350, 450, 550, 650, 1250, 1350), comprenant :
un processeur d'application (AP) (160, 260, 360, 460, 560, 660, 1260) ; et
un modem (170, 270, 370, 470, 570, 670, 1270) couplé à l'AP, dans lequel l'AP et le modem sont configurés pour réaliser l'un quelconque des procédés selon les revendications 1 à 14.
